(19) Europäisches Patentamt
European Patent Office
Office européen des brevets

(11) EP 1 408 268 A1

(12) EUROPEAN PATENT APPLICATION

(43) Date of publication:
14.04.2004 Bulletin 2004/16

(51) Int Cl.7: F16L 11/12, F16L 11/04

(21) Application number: 03022213.7

(22) Date of filing: 30.09.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 30.09.2002 JP 2002286410
29.09.2003 JP 2003337861

(71) Applicants:
- Tokai Rubber Industries, Ltd.
  Komaki-shi, Aichi-ken, 485-8550 (JP)
- NISSAN MOTOR COMPANY, LIMITED
  Yokohama-shi, Kanagawa 221-0023 (JP)

(72) Inventors:
- Katayama, Kazutaka
  Komaki-shi, Aichi-ken, 485-8550 (JP)
- Suzuki, Junichiro
  Komaki-shi, Aichi-ken, 485-8550 (JP)
- Kasahara, Kazuhito
  Komaki-shi, Aichi-ken, 485-8550 (JP)
- Ito, Hiroaki
  Komaki-shi, Aichi-ken, 485-8550 (JP)
- Kitamura, Hirokazu
  Komaki-shi, Aichi-ken, 485-8550 (JP)
- Fujinuma, Yuichi
  Isehara-shi, Kanagawa-ken, 259-1135 (JP)
- Kumagai, Hiroshi
  Yamato-shi, Kanagawa-ken, 242-0024 (JP)
- Morohoshi, Katsumi
  Yokohama-shi, Kanagawa-ken, 236-0052 (JP)

(74) Representative: Frankland, Nigel Howard
FORRESTER & BOEHMERT
Pettenkoferstrasse 20-22
80336 München (DE)

# (54) Automotive in-tank fuel hose

(57) An automotive in-tank fuel hose which has excellent flexibility and is highly resistant to sour gasoline and to hydrolysis. The automotive in-tankfuel hose for installation in a fuel tank comprises a single layer structure formed by at least one of (A) a thermoplastic polybutylene terephthalate elastomer containing a dimer acid moiety and (B) a thermoplastic polybutylene naphthalate elastomer containing a dimer acid moiety. The automotive in-tank fuel hose follows a deformation of the fuel tank and absorbs vibration caused by a fuel pump.

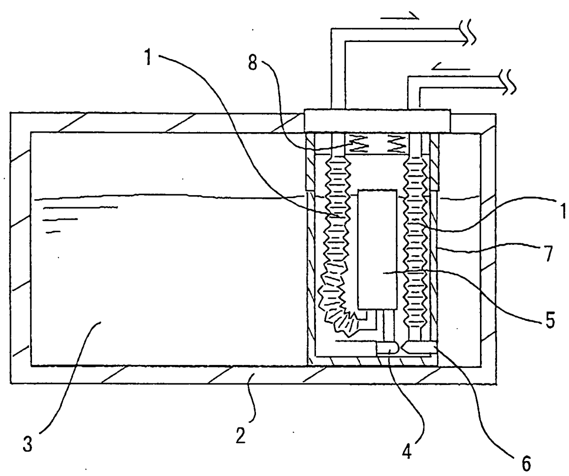


Figure

EP 1 408 268 A1

## Description

## BACKGROUND OF THE INVENTION

### Field of the Invention

The present invention relates to an automotive in-tank fuel hose for installation in an automotive fuel tank.

### Description of the Art

Generally, an automotive fuel piping system uses a mechanism which draws up a fuel such as a gasoline or a gasohol (an alcohol-containing gasoline) from a fuel tank and supplies the fuel to an engine for operation, as required. In such a mechanism, a fuel is drawn up by means of a pump which is built in the fuel tank, so-called a fuel pump. Also, in such a mechanism, a hose connected with the fuel pump is called an in-tank hose, which is built in the fuel tank, as well as the fuel pump. The sole figure of the drawing is a diagram schematically illustrating the construction inside the fuel tank. In the figure, a reference numeral 1 denotes an in-tank hose, while a reference numeral 1' similarly denotes another in-tank hose on a return side, equivalent to the above-mentioned in-tank hose 1. Also, a reference numeral 2 denotes a fuel tank; 3: gasoline; 4: a filter; 5: a fuel pump; 6: a jet pump; 7: a polyoxymethylene (POM) housing; and 8: a spring. Gasoline 3, drawn up from the fuel tank 2 into the housing 7 by a Venturi effect by means of the jet pump 6, passes through the filter 4, and is fed into the in-tank hose 1 by means of the fuel pump 5, and is in turn supplied to an outside fuel circuit such as an engine, as it is. The housing 7 accommodating the in-tank hose 1 and the like is provided with the spring 8 so as to compensate for deformation of the fuel tank 2 due to thermal expansion. Also, the in-tank hose 1 generally has a bellows structure so as to compensate for deformation of the fuel tank 2 due to thermal expansion and to absorb vibration due to the fuel pump 5.

Since the in-tank hose 1 is installed in the above-mentioned conditions, an outer peripheral surface as well as an inner peripheral surface of the in-tank hose require sour gasoline resistance, that is, resistance to sour gasoline which is generated through oxidation of the gasoline 3. Further, since the gasoline 3 contains water at about 0.5%, the in-tank hose 1 requires resistance to hydrolysis due to water. For this reason, and to cope with these requirements heretofore, the entire hose has been made of materials excellent in sour gasoline resistance and the like such as fluororubber (FKM), hydrogenated acrylonitrile-butadiene rubber (H-NBR), polyamide 11 (PA11) and polyamide 12 (PA12) (Japanese Unexamined Patent Publication No. 7-118349 (1995)).

However, FKM is expensive and further is difficult to be formed into the bellows structure required for the above-mentioned in-tank hose 1. When H-NBR is used for formation of the in-tank hose 1, a plasticizer and an antioxidant blended in H-NBR and remaining residue of a vulcanizing agent, also blended therein, may be extracted into the gasoline, resulting in clogging of the filter and contamination of motor electrodes in the pump, which may cause failure in operation of the motor. When PA11 or PA12 is used for the above-mentioned in-tank hose 1, a bellows structure only cannot provide sufficient flexibility, which therefore requires the addition of a plasticizer for sufficient flexibility. Extracted plasticizer may result in clogging of the filter and contamination of motor electrodes in the pump.

In view of the foregoing, it is an object of the present invention to provide an automotive in-tank fuel hose which has excellent flexibility and is highly resistant to sour gasoline and hydrolysis.

## SUMMARY OF THE INVENTION

In accordance with the present invention to achieve the aforesaid object, among others, there is provided an automotive in-tank fuel hose for installation in a fuel tank comprising a single layer structure formed by at least one of (A) a thermoplastic polybutylene terephthalate elastomer containing a dimer acid moiety (hereinafter abbreviated as PBT-TPE containing a dimer acid moiety) and (B) a thermoplastic polybutylene naphthalate elastomer containing a dimer acid moiety (hereinafter abbreviated as PBN-TPE containing a dimer acid moiety), the automotive in-tank fuel hose being capable of following a deformation of the fuel tank and absorbing vibration caused by a fuel pump.

The inventors of the present invention conducted studies to solve the above-mentioned problems. During a process, they have conducted studies focused upon polyester resins showing less permeability to gasoline including a gasohol. In studies, they also have made research on such problems that the sole use of polyester resin offers too high rigidity and inferior hydrolysis. As a result, they found that when a hose is made of a thermoplastic elastomer (TPE) containing a polyester resin such as a polybutylene terephthalate (PBT) or polybutylene naphthalate (PBN) as a hard segment and polyether as a soft segment, the above-mentioned problems may be improved. However, as a result of experiments, it was found that a polyether contained as a soft segment in the thermoplastic polyester elastomer is liable to be eroded by a peroxide in the sour gasoline, which thereby may result in the deterioration of the hose. As a result of further research and development, the inventors found that, when a dimer acid moiety is introduced into the

above-mentioned specific thermoplastic elastomer as a hard segment to reduce the proportion of the soft segment (polyether) or to entirely replace the soft segment with the dimer acid moiety, the hose is less likely to be eroded by the peroxide in the sour gasoline, whereby the hose tends to be free from deterioration by having an improved sour gasoline resistance. Thus, the present invention has been attained.

As mentioned above, the inventive automotive in-tank fuel hose for installation in a fuel tank comprises a single layer structure formed by at least one of PBT-TPE containing a dimer acid moiety and PBN-TPE containing a dimer acid moiety. Since a dimer acid moiety is introduced into PBT-TPE or PBN-TPE as a hard segment to reduce the proportion of the soft segment (polyether) or to entirely replace the soft segment with the dimer acid moiety, the soft segment is less likely to be eroded by the peroxide in the sour gasoline, whereby the hose tends to have an improved sour gasoline resistance without deterioration of flexibility and also to have excellent hydrolysis resistance. Especially, when the content of the dimer acid moiety is within a specific range in the thermoplastic elastomer, the above-mentioned properties for the inventive automotive in-tank hose may be further improved.

## BRIEF DESCRIPTION OF THE DRAWING

The sole figure of the drawing is a diagram schematically illustrating the construction inside an automotive fuel tank.

## DESCRIPTION OF THE PREFERRED EMBODIMENTS

The present invention will hereinafter be described in detail by way of embodiments thereof.

The automotive in-tank fuel hose is installed in a fuel tank and has a structure which may follow deformation of the fuel tank and absorb vibration caused by a fuel pump (for example, a bellows structure as shown in Figure). A notable feature of the present invention is a single layer structure comprising a specific thermoplastic elastomer (TPE) containing a dimer acid moiety.

As material for the inventive automotive in-tank fuel hose, at least one of the following (A) and (B) is used.

(A) PBT-TPE containing a dimer acid moiety; and
(B) PBN-TPE containing a dimer acid moiety.

The dimer acid is a dimer obtained through a reaction of two molecules of an organic acid. Examples of the dimer acid include aliphatic dimer acids, alicyclic dimer acids and aromatic dimer acids, which may be used either alone or in combination.

Examples of aliphatic dimer acids include dimer acids represented by the following general formulae (1) and (2) , which may be used either alone or in combination.

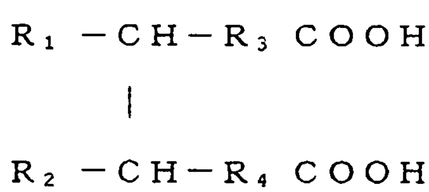

··· (1)

wherein $R_1$ and $R_2$, which may be the same or different, are alkyl groups; $R_3$ and $R_4$, which may be the same or different, are alkylene groups; and a total carbon number of $R_1$ to $R_4$ is preferably 24 to 36.

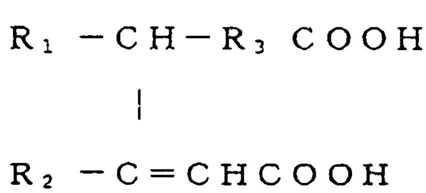

··· (2)

wherein $R_1$ and $R_2$, which may be the same or different, are alkyl groups; $R_3$ is an alkylene group; and a total carbon number of $R_1$ to $R_3$ is preferably 24 to 36.

Examples of alicyclic dimer acids include dimer acids represented by the following general formulae (3) to

(6), which may be used either alone or in combination.

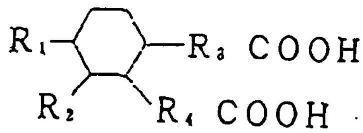 ··· (3)

wherein $R_1$ and $R_2$, which may be the same or different, are alkyl groups; $R_3$ and $R_4$, which may be the same or different, are alkylene groups; and a total carbon number of $R_1$ to $R_4$ is preferably 24 to 36.

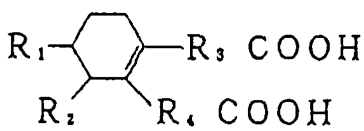 ··· (4)

wherein $R_1$ and $R_2$, which may be the same or different, are alkyl groups; $R_3$ and $R_4$, which may be the same or different, are alkylene groups; and a total carbon number of $R_1$ to $R_4$ is preferably 24 to 36.

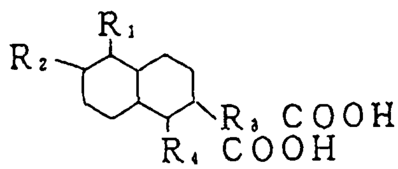 ··· (5)

wherein $R_1$ and $R_2$, which may be the same or different, are alkyl groups; $R_3$ and $R_4$, which may be the same or different, are alkylene groups; and a total carbon number of $R_1$ to $R_4$ is preferably 24 to 36.

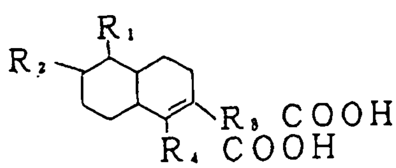 ··· (6)

wherein $R_1$ and $R_2$, which may be the same or different, are alkyl groups; $R_3$ and $R_4$, which may be the same or different, are alkylene groups; and a total carbon number of $R_1$ to $R_4$ is preferably 24 to 36.

Examples of aromatic dimer acids include dimer acids represented by the following general formula (7).

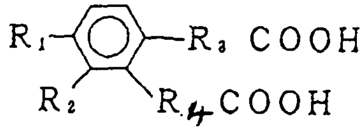 ··· (7)

wherein $R_1$ and $R_2$, which may be the same or different, are alkyl groups; $R_3$ and $R_4$, which may be the same or different, are alkylene groups; and a total carbon number of $R_1$ to $R_4$ is preferably 24 to 36.

More specific examples of preferred dimer acids include acids sold under the trade name PRIPOL 1008 by Uniqema of Gouda, the Netherlands (a hydrogenated dimer acid product containing an aromatic dimer acid, an alicyclic dimer acid and an aliphatic dimer acid in a molar ratio of 9:54:37 (carbon number: 36)), Uniqema's PRIPOL 1009 (a

hydrogenated dimer acid product containing an aromatic dimer acid, an alicyclic dimer acid and an aliphatic dimer acid in a molar ratio of 13: 64 :23 (carbon number: 36)), Uniqema's PRIPOL 1098 (an unhydrogenated dimer acid product containing an aromatic dimer acid, an alicyclic dimer acid and an aliphatic dimer acid in a molar ratio of 13:64:23 (carbon number: 36) ) , Uniqema's PRIPLAST 3008 (a dimethyl ester product of PRIPOL 1008), and Uniqema's PRIPLAST 1899 (a dimethyl ester product of PRIPOL 1009) . Among these dimer acid products, the hydrogenated dimer acid products (PRIPOL 1008, PRIPOL 1009, PRIPLAST 3008 and PRIPLAST 1899) are particularly preferred.

The above-mentioned (A), the PBT-TPE containing the dimer acid moiety may be prepared, for example, by partly substituting terephthalic acid (TPA: a material for preparation of the PBT) with the dimer acid. The above-mentioned (B), the PBN-TPE containing the dimer acid moiety may be prepared, for example, by partly substituting 2, 6-naphthalene dicarboxylate (a material for preparation of the PBN) with the dimer acid. For the preparation of the TPE containing the dimer acid moiety, the above-mentioned (A) or (B) , and a polyether and/or a polyester as a soft segment may be copolymerized with the dimer acid.

The proportion of the soft segment contained in the TPE containing the dimer acid moiety is preferably not greater than 20 wt% from the viewpoint of sour gasoline resistance.

An example of the polyether which may be copolymerized with the dimer acid is polytetramethylene glycol (PTMG). Examples of the polyester which may be copolymerized with the dimer acid include polybutylene adipate (PBA) and poly - ε-caprolactone.

The proportion of the dimer acid moiety in the TPE containing the dimer acid is preferably 3 mol% to 30 mol%, particularly preferably 6 mol% to 20 mol%. If the proportion of the dimer acid moiety is smaller than 3 mol%, flexibility (or crazing resistance) and hydrolysis resistance tend to be deteriorated. If the proportion of the dimer acid moiety is greater than 30 mol%, the crystallinity of the PBT or the PBN tends to be reduced, resulting in reduction of gasoline resistance and mechanical strength.

The TPE containing the dimer acid moiety preferably has a flexural modulus of 150 MPa to 1200 MPa, particularly preferably 300 MPa to 700 MPa.

The hose may further contain an electrically conductive material such as carbon black, carbon nano-tubes or metal powder. This conductive material tends to dissipate static electricity, generated by a fuel pump or a filter, from the hose to outside the hose to help prevent accidents such as ignition of a fuel (such as gasoline) which may otherwise occur due to the static electricity. The PBT, PBN and their thermoplastic elastomers may appropriately be contained, as required according to the case, as long as the effects of the present invention are not deteriorated, that is, within a maximum range of about 20 wt% of the whole amount.

The inventive hose is produced, for example, in the following manner. The specific material is prepared and extruded by means of an extruder (with the use of a mandrel, as required), and in turn is partially formed into a bellows structure by means of a vacuum forming corrugator (120HS model available from Corma Inc. of Yokohama, Japan) and simultaneously cooled to solidification. Thus, the intended hose (see the Figure) is produced.

The dimensions of the inventive hose thus produced are not specifically limited, however, the inventive hose typically has a thickness of 0.5 mm to 1.5 mm on straight portions at both ends, preferably 0.7 mm to 1.2 mm. The inventive hose typically has an inner diameter of 3 mm to 10 mm on straight portions at both ends, preferably 5 mm to 8 mm. The inventive hose typically has an outer diameter of 4 mm to 13 mm on straight portions at both ends, preferably 6 mm to 10 mm. Each outer diameter of root and thread on the bellows portion is preferably root / thread = about 7 mm / 10 mm, and a pitch length thereof is preferably about 3 mm.

Next, an explanation will be given to Examples and Comparative Examples.

Prior to the explanation of Examples and Comparative Examples, the materials therein employed will be explained.

<u>PBT-TPE containing dimer acid moiety (1)</u>

PBTS01562 (a dimer acid moiety in a proportion of 6 mol% and having a flexural modulus of 650 MPa) available from Kanebo Gohsen, Ltd. of Osaka, Japan.

<u>PB-T-TPE containing dimer acid moiety (2)</u>

PBT-TPE containing dimer acid moiety (the dimer acid: Uniqema's PRIPOL 1008 as a dimer acid moiety in a proportion of 10 mol%) and having a flexural modulus of 340 MPa.

<u>PBT-TPE containing dimer acid moiety (3)</u>

PBT-TPE containing dimer acid moiety (the dimer acid: Uniqema's PRIPOL 1008 as a dimer acid moiety in a proportion of 20 mol%) and having a flexural modulus of 150 MPa.

PBT-TPE containing dimer acid moiety (4)

PBT-TPE containing dimer acid moiety (the dimer acid: Uniqema's PRIPOL 1008 as a dimer acid moiety in a proportion of 2 mol%) and having a flexural modulus of 1600 MPa .

PBT-TPE containing dimer acid moiety (5)

PBT-TPE containing dimer acid moiety and polytetramethylene glycol (PTMG) (the dimer acid: Uniqema's PRIPOL 1008 as a dimer acid moiety in a proportion of 10 mol%; PTMG: a molecular weight of a number average molecular weight according to polystyrene calculation by gel permeation chromatography: 2000; content of PTMG: 20 wt%) and having a flexural modulus of 200 MPa.

PBN-TPE containing dimer acid moiety

2, 6-dimethyl naphthalate (DMN) as a material for the PBN, dimer based dimethyl ester (Uniqema's PRIPLAST 3008 ) , 1, 4-butanediol (BD) , and tetra n-butyl titanate, as polymerization catalyst, were put into an ester exchange bath, were heated at 210°C, and thus produced methanol was withdrawn, and then ester exchange was conducted. In turn, the reaction product was gradually vacuum heated at 260°C for 1 hour for polycondensation until degree of vacuum became 0.5 mmHg. Thus, PBN-TPE containing the diner acid moiety (a dimer acid moiety in a proportion of 10 mol%) and having a flexural modulus of 350Mpa was obtained.

PBT resin

CELANEX 2001 (having a flexural modulus of 2450 MPa) available from Ticona.

PBN resin

TQB-OT (having a flexural modulus of 2100 MPa) available from Teijin Chemicals, Ltd. of Tokyo, Japan.

Polyether copolymerized TPEE

HYTREL 5577 (having a flexural modulus of 200 MPa) available from DuPont-Toray Co., Ltd. of Tokyo, Japan.

Polyester copolymerized TPEE

PERPRENE S-6001 (having a flexural modulus of 570 MPa) available from Toyobo Co., Ltd. of Osaka, Japan.

PA 12 (containing plasticizer)

RILSAN AESN NOIR P40TL (containing a plasticizer at 14% and having a flexural modulus of 340 MPa) available from Atofina S.A. of Paris, France.

Examples 1 to 6 and Comparative Examples 1 to 5

Hoses of Examples 1 to 6 and Comparative Examples 1 to 5 were produced using the material as shown in Tables 1 and 2. Each material was extruded by an extruder so as to have a thickness as shown in Tables 1 and 2, which in turn was formed into a bellows structure (length of the bellows portion: 150 mm, root / thread = about 7 mm / 10 mm, a pitch length: 3 mm, length of straight portions at both ends: 25 mm × 2, and an inner diameter of the both straight portions: 6 mm) by means of a vacuum forming corrugator (120HS model available from Corma Inc. of Yokohama, Japan) and simultaneously cooled to solidification, and then cut for producing the hose by means of a cutting machine.

The hoses of the Examples and the Comparative Examples thus produced were evaluated for characteristic properties thereof in the following manners. The results of the evaluation are shown in Tables 1 and 2.

Sour gasoline resistance

A model of degraded gasoline was prepared by blending 5 wt% of lauroyl peroxide (LPO) in Fuel C (50 vol% of toluene + 50 vol% of isooctane). Then, each hose (length: 20 cm) was respectively immersed into the model of

degraded gasoline at 60°C for two weeks (exchange of the model of degraded gasoline: once a week), and then each hose was cooled to room temperature. A part of the hose was sampled and bent by 180 degrees. The state of the sampled part was visually observed for the evaluation of the sour gasoline resistance. In Tables 1 and 2, the symbol ○ indicates that the hose suffered from no abnormality, and the symbol × indicates that the hose was cracked or fractured.

Hydrolysis resistance

A hose was allowed to stand at a temperature of 80°C at a humidity of 95%. In turn, a part of the hose was sampled each 500 hours and cooled to room temperature and was bent by 180 degrees. The state of the sampled part was visually observed for evaluating the hydrolysis resistance. In Tables 1 and 2, the symbol × indicates that an abnormality such as fold-down occurred within 1000 hours, the symbol Δ indicates that such abnormality occurred between 1000 and 1500 hours, and the symbol ○ indicates that no abnormality occurred over 1500 hours.

Extraction

Each hose (length: 20 cm) was filled with gasohol which was a mixture of Fuel C and methanol at 85: 15 (vol%), and was allowed to stand at 60°C for 1 week. Thereafter, the gasohol was withdrawn and condensed to 25% thereof by volume and then separated by a centrifugal separator. The separated material was visually observed for evaluating the extraction. In Tables 1 and 2, the symbol ○ indicates that no sediment was seen, while the symbol × indicates that sediment was seen.

Crazing resistance

An end portion of each hose was expanded and a stainless pipe (having an outer diameter of 8 mm at a straight portion and an outer diameter of 10 mm at a bulged portion) was press fitted therein. The assembly was entirely immersed into a gasohol (a mixture of Fuel C and methanol at 85:15 (vol%)) and allowed to stand at 40°C for 1 week. Thereafter, the end portion into which the pipe was press fitted was divided into halves. The condition of the end portion near to the press-fitted portion was observed by means of a 30 × magnifier. In Tables 1 and 2, the symbol ○ indicates that no abnormality such as crazing occurred, while the symbol × indicates that crazing occurred.

Table 1

| | Example | | | | | |
|---|---|---|---|---|---|---|
| | 1 | 2 | 3 | 4 | 5 | 6 |
| Material | PBT-TPE containing dimer acid moiety (1) | PBT-TPE containing dimer acid moiety (2) | PBT-TPE containing dimer acid moiety (3) | PBT-TPE containing dimer acid moiety (4) | PBT-TPE containing dimer acid moiety (5) | PBN-TPE containing dimer acid moiety |
| Thickness (μm) | 500 | 1000 | 1000 | 500 | 500 | 500 |
| Sour gasoline resistance | ○ | ○ | ○ | ○ | ○ | ○ |
| Hydrolysis resistance | ○ | ○ | ○ | △ | ○ | ○ |
| Extraction | ○ | ○ | ○ | ○ | ○ | ○ |
| Crazing resistance | ○ | ○ | ○ | ○ | ○ | ○ |

Table 2

| | Comparative Example 1 | Comparative Example 2 | Comparative Example 3 | Comparative Example 4 | Comparative Example 5 |
|---|---|---|---|---|---|
| Material | PBT resin | PBN resin | Polyether copolymerized TPEE | Polyester copolymerized TPEE | PA12 (containing plasticizer) |
| Thickness ($\mu m$) | 500 | 500 | 1000 | 1000 | 1000 |
| Sour gasoline resistance | ○ | ○ | × | ○ | ○ |
| Hydrolysis resistance | × | ○ | ○ | × | ○ |
| Extraction | ○ | ○ | ○ | ○ | × |
| Crazing resistance | × | × | ○ | ○ | ○ |

As can be understood from the aforesaid results, the hoses of Examples were excellent in sour gasoline

resistance, hydrolysis resistance, extraction and crazing resistance.

On the other hand, the hoses of Comparative Examples 1 and 4 were inferior in hydrolysis resistance. Further, the hoses of Comparative Examples 1 and 2 were inferior in crazing resistance. The hose of Comparative Example 3 was inferior in sour gasoline resistance, because the soft segment of polyether was easy to be eroded by the sour gasoline. The hose of Comparative Example 5 was inferior in extraction because a plasticizer was contained therein.

The features disclosed in the foregoing description, in the claims and/or in the accompanying drawings may, both separately and in any combination thereof, be material for realising the invention in diverse forms thereof.

## Claims

1. An automotive in-tank fuel hose for installation in a fuel tank, the hose comprising a single layer structure formed by at least one of (A) a thermoplastic polybutylene terephthalate elastomer containing a dimer acid moiety and (B) a thermoplastic polybutylene naphthalate elastomer containing a dimer acid moiety, the automotive in-tank fuel hose being capable of following a deformation of the fuel tank and absorbing vibration caused by a fuel pump.

2. An automotive in-tank fuel hose as set forth in claim 1, wherein the dimer acid moiety is present in a proportion of 3 to 30 mol% in the thermoplastic elastomer containing the dimer acid moiety.

3. An automotive in-tank fuel hose as set forth in Claim 2 wherein the dimer acid moiety is present in a preparation of 6 to 20 mol % in the thermoplastic elastomer containing the dimer acid moiety.

4. An automative in-tank fuel hose as set forth in any one of Claims 1 to 3 wherein the dimer acid moiety includes one or more aliphatic dimer acids represented by the following general formulae (1) and (2), either alone or in combination;

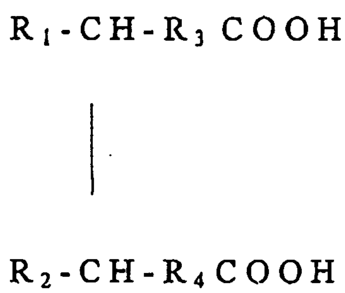

... (1)

wherein $R_1$ and $R_2$, which may be the same or different, are alkyl groups; $R_3$ and $R_4$, which may be the same or different, are alkylene groups; and a total carbon number of $R_1$ to $R_4$ is preferably 24 to 36;

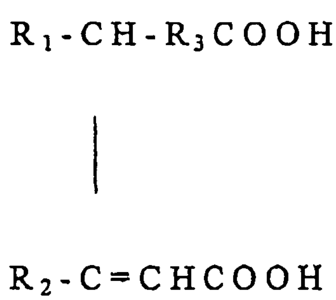

... (2)

wherein $R_1$ and $R_2$, which may be the same or different, are alkyl groups; $R_3$ is an alkylene group; and a total carbon number of $R_1$ to $R_3$ is 24 to 36.

5. An automotive in-tank fuel hose as set further in any one of Claims 1 to 4 wherein the dimer acid moiety includes

one or more alicyclic acids represented by the following general formulae (3) to (6), either alone or in combination;

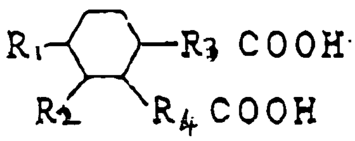

··· (3)

wherein $R_1$ and $R_2$, which may be the same or different, are alkyl groups; $R_3$ and $R_4$, which may be the same or different, are alkylene groups; and a total carbon number of $R_1$ to $R_4$ is 24 to 36;

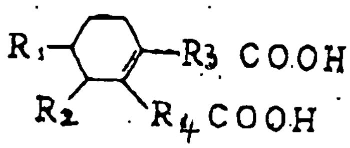

··· (4)

wherein $R_1$ and $R_2$, which may be the same or different, are alkyl groups; $R_3$ and $R_4$, which may be the same or different, are alkylene groups; and a total carbon number of $R_1$ to $R_4$ is 24 to 36;

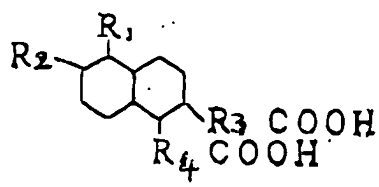

··· (5)

wherein $R_1$ and $R_2$, which may be the same or different, are alkyl groups; $R_3$ and $R_4$, which may be the same or different, are alkylene groups; and a total carbon number of $R_1$ to $R_4$ is 24 to 36;

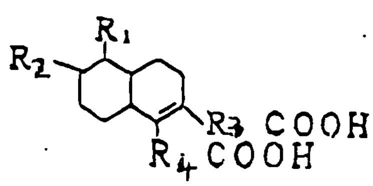

··· (6)

wherein $R_1$ and $R_2$, which may be the same or different, are alkyl groups; $R_3$ and $R_4$, which may be the same or different, are alkylene groups; and a total carbon number of $R_1$ to $R_4$ is 24 to 36.

**6.** An automotive in-tank fuel hose as set forth in any one of Claims 1 to 5 wherein the dimer acid moiety includes one or more aromatic dimer acids represented by the following general formula (7).

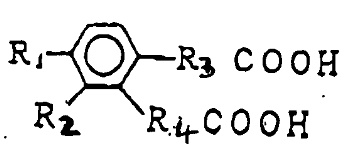

··· (7)

wherein $R_1$ and $R_2$, which may be the same or different, are alkyl groups; $R_3$ and $R_4$, which may be the same or different, are alkylene groups; and a total carbon number of $R_1$ to $R_4$ is 24 to 36.

**7.** An automotive in-tank fuel hose as set forth in any one of Claims 1 to 6 wherein the hose further contains an electrically conductive material.

**8.** A method of making an automotive in-tank fuel hose for installation in a fuel tank, the hose comprising a single layer structure formed from a specific material incorporating at least one of (A) a thermoplastic polybutylene terephthalate elastomer containing a dimer acid moiety and (B) a thermoplastic polybutylene naphthalate elastomer containing a dimer acid moiety, the method comprising the steps of extruding the specific material by means of an extruder, and forming the extruded material into a bellows structure by means of a vacuum forming corrugator, and cooling the extruded and corrugated material.

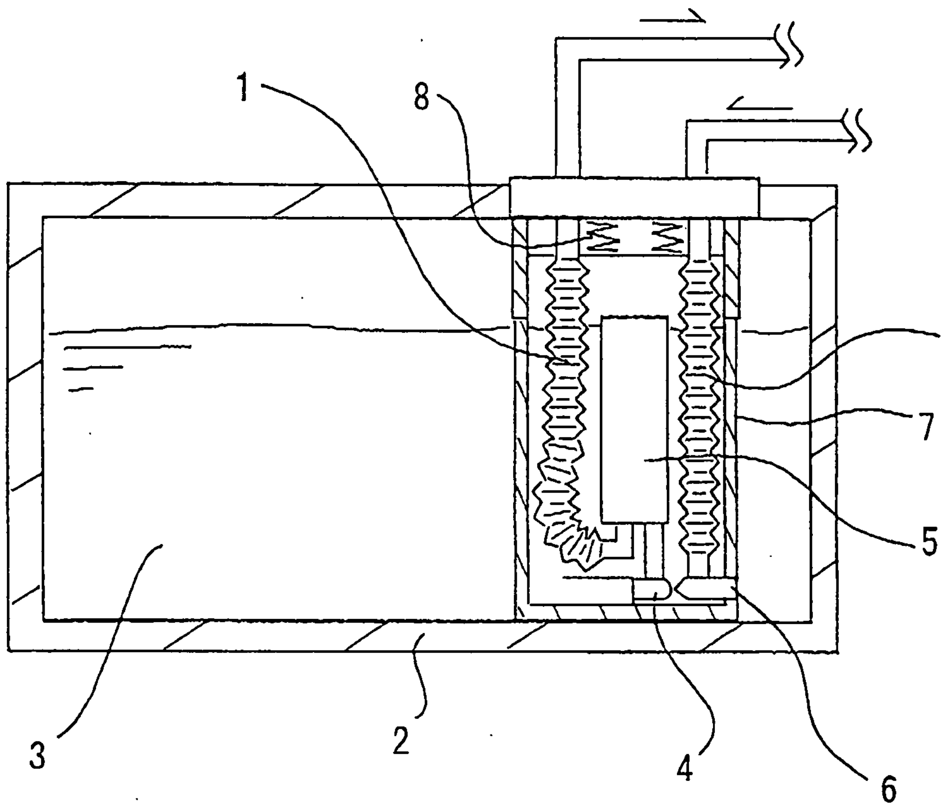


Figure

European Patent Office

# EUROPEAN SEARCH REPORT

Application Number
EP 03 02 2213

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | EP 1 333 212 A (TOKAI RUBBER IND LTD) 6 August 2003 (2003-08-06) * paragraph '0033! * | 1-17 | F16L11/12 F16L11/04 |
| X | PATENT ABSTRACTS OF JAPAN vol. 018, no. 192 (M-1587), 4 April 1994 (1994-04-04) & JP 06 001152 A (TOKAI RUBBER IND LTD), 11 January 1994 (1994-01-11) | 1 | |
| Y | * abstract * | 1-17 | |
| Y | PATENT ABSTRACTS OF JAPAN vol. 2002, no. 11, 6 November 2002 (2002-11-06) & JP 2002 213655 A (NISSAN MOTOR CO LTD), 31 July 2002 (2002-07-31) * abstract * | 1-17 | |
| T | & US 2003/021560 A1 (NISSAN MOTOR) 3 July 2003 (2003-07-03) * the whole document * | 1-17 | |
| | | | TECHNICAL FIELDS SEARCHED (Int.Cl.7) |
| A | "CAPLUS" CAPLUS, XP002263712 | 1-17 | F16L |
| A | & JP 09 048909 A (KANEBO) 18 February 1997 (1997-02-18) * abstract * | 1-17 | |

The present search report has been drawn up for all claims

| Place of search | Date of completion of the search | Examiner |
|---|---|---|
| THE HAGUE | 15 January 2004 | Schmidt, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT ON EUROPEAN PATENT APPLICATION NO. EP 03 02 2213

This annex lists the patent family membersrelating to the patent documents cited in the above-mentioned European search report.
The members are as contained in the European Patent Office EDP file on
The European Patent Office is in no way liable for these particulars which are merely given for the purpose of information.

15-01-2004

| Patent document cited in search report | | Publication date | Patent family member(s) | | Publication date |
|---|---|---|---|---|---|
| EP 1333212 | A | 06-08-2003 | JP | 2003287165 A | 10-10-2003 |
| | | | EP | 1333212 A2 | 06-08-2003 |
| | | | US | 2003150503 A1 | 14-08-2003 |
| JP 06001152 | A | 11-01-1994 | NONE | | |
| JP 2002213655 | A | 31-07-2002 | US | 2003121560 A1 | 03-07-2003 |

EPO FORM P0459

For more details about this annex : see Official Journal of the European Patent Office, No. 12/82